# EUROPÄISCHE PATENTSCHRIFT

(11) **EP 1 472 128 B1**
(45) Veröffentlichungstag und Bekanntmachung des Hinweises auf die Patenterteilung: **19.10.2005**
(21) Anmeldenummer: 03734670.7
(22) Anmeldetag: 15.01.2003
(51) Int. Cl.: B62B 1/12

(54) **TRANSPORTKARRE**
DOLLY
CHARIOT TRANSPORTEUR

(30) Priorität: 29.01.2002 DE 10204439; 27.05.2002 DE 10223459; 23.12.2002 DE 10260719
(43) Veröffentlichungstag der Anmeldung: 03.11.2004
(73) Patentinhaber: wolfcraft GmbH, 56746 Kempenich (DE)
(72) Erfinder: ZIMMER, Jürgen, 56077 Koblenz (DE)
(74) Vertreter: Grundmann, Dirk
(86) Internationale Anmeldenummer: PCT/EP2003/000321
(87) Internationale Veröffentlichungsnummer: WO 2003/064235

(56) Entgegenhaltungen:
- EP-A- 0 688 711
- FR-A- 2 334 550
- US-A- 3 659 867
- US-A- 5 439 239
- US-A- 6 053 514

## Beschreibung

Die Erfindung betrifft eine Transportkarre gemäß dem Oberbegriff des Anspruchs 1. Eine derartige Transportkarre zeigt die US 5,439,239.

Eine ähnliche Transportkarre zeigt auch die US 5,803,471. Wenn bei dieser Transportkarre die Schüppe aus der Gebrauchsstellung, die einer Horizontallage entspricht, in die Nichtgebrauchsstellung, die einer Vertikallage der Schüppe entspricht, verschwenkt wird, so werden um eine quer zur Schüppenschwenkachse sich erstreckende Lagerachse schwenkbare Radträger, die jeweils ein Laufrad tragen, ebenfalls in eine Parallellage zum Tragrahmen verschwenkt. Dabei erfolgt die Bewegungskopplung der Radträger zu der Schüppenachse durch eine Stirnverzahnung, die von ineinander greifenden Stiften ausgebildet wird. In der Gebrauchsstellung kann auf die Schüppe eine Last gelegt werden. Das Ende des in der Gebrauchsstellung in einer Vertikallage liegenden Tragrahmens bildet einen höhenverstellbaren Handgriff aus. Die Räder ragen in der Gebrauchsstellung nach rückwärts ab, so dass durch Verkippen des Tragrahmens die Last gehoben wird. Die Transportkarre kann dann über die Räder verschoben werden. In der Nichtgebrauchsstellung liegen die Räder in einer Parallelebene zum Tragrahmen.

Aus der US 3,788,659 ist ebenfalls eine Transportkarre vorbekannt, bei welcher die Schüppe und zwei Radträger in eine Parallellage zum Tragrahmen bringbar sind.

Diese, ein Verwahren der Transportkarre in der Nichtgebrauchsstellung erleichternde Einstellung kann auch bei der Transportkarre, die die EP 0 688 711 A2 zeigt, vorgenommen werden. Bei dieser Transportkarre werden zwei unabhängig von der Schüppe um ihre Lagerachsen schwenkbare Radträger in der Gebrauchsstellung mittels einer um eine parallel zur Schüppenachse verschwenkbaren Spurstange fixiert.

Die US 5,468,005 zeigt eine Transportkarre, bei welcher die Radträger ebenfalls mit einer Verzahnung mit der Schüppe gekoppelt sind. Auch hier ist der Handgriff höhenverstellbar.

Eine Transportkarre ähnlicher Art zeigt die US 3,659,867. Diese Schrift zeigt einen schwenkbaren Bügel, der mit der Schüppe derart gekoppelt ist, dass beim Verschwenken des Bügels die Schüppe ausklappt. Die Radträger müssen hier gesondert aus der Verwahrstellung in die Gebrauchsstellung geschwenkt werden. Allerdings bietet der Bügel die Möglichkeit, die Radträger stabilisierend miteinander zu verbinden.

Der Erfindung liegt die Aufgabe zugrunde, die eingangs beschriebene Transportkarre gebrauchsvorteilhaft weiterzuentwickeln.

Gelöst wird die Aufgabe durch die in den Ansprüchen angegebene Lösung, wobei der Anspruch 1 zunächst und im Wesentlichen auf eine um eine parallel zur Schüppenachse verschwenkbare Betätigungshandhabe abzielt, die mit einem Lenker mit der Schüppe bewegungsgekoppelt ist, wobei beim Verschwenken der Handhabe von einer Nichtgebrauchsstellung in eine Zwischenstellung die Radträger aus ihrer Verwahrstellung bis in ihre Gebrauchsstellung ausschwenken. Beim Weiterschwenken der Handhabe bis in die Endstellung, in welcher die Handhabe die beiden Radträger schwenkfixiert, wird auf den Lenker eine Spannkraft ausgeübt. Die Betätigungshandhabe ist erfindungsgemäß nicht nur in der Lage, beim Verschwenken die Schüppe von der Nichtgebrauchsstellung in die Gebrauchsstellung mitzuschwenken. Sie schwenkt die Schüppe auch beim Zurückschwenken in die Nichtgebrauchsstellung. Darüber hinaus wird mit nur einem Handgriff die Schüppe in die Gebrauchsstellung geschwenkt und werden auch die beiden Radträger aus ihrer Verwahrstellung herausgeschwenkt. Die Betätigungshandhabe dient in der Gebrauchsstellung auch als Spurstange, um die Position der beiden Radträger zu fixieren. Die Betätigungshandhabe schwenkbetätigt über einen Lenker die Schüppe und die mit ihr bewegungsgekoppelten Radträger. Bevorzugt sitzt die Spurstange am Ende eines Kraftarmes eines zweiarmigen Hebels. Der Lastarm dieses Hebels greift an einem etwa in der Tragrahmenebene verlagerbaren Lenker an. Dieser Lenker ist an einem Betätigungsfortsatz der Schüppe angelenkt. Wird durch Angriff an der Spurstange der zweiarmige Hebel verlagert, so wird auch der Lenker verlagert. Indem dieser an dem Betätigungsfortsatz der Schüppe angreift, verlagert er die Schüppe. Bevorzugt wird der Lenker bei der Verlagerung der Handhabe von einer der Gebrauchsstellung entsprechenden Schwenkstellung in eine der Nichtgebrauchsstellung entsprechenden Stellung über einen Totpunkt verlagert. Vor Erreichen der Totpunktlage erreicht der von der Nichtgebrauchsstellung in die Gebrauchsstellung verschwenkte Handhaben-Hebel eine Spannstellung. Diese Spannstellung entspricht bevorzugt einer Handhabenschwenkstellung, in welcher sich die Spurstange außerhalb des Schwenkbewegungsraumes der Laufräder befindet. Nach der Spannstellung wird die Handhabe derart weiterverlagert, dass die Spurstange in dem Schwenkbewegungsraum der beiden Laufräder einschwenkt. Die Handhabe kann in der Totpunktstellung zwischen den beiden Rädern oder außerhalb des Zwischenraumes der beiden Räder liegen. Zufolge dieser Ausgestaltung wird die Spurstange ausgehend von der Gebrauchsstellung zunächst um einen gewissen Leergang verschwenkt, in welchem Leergang sich weder die Schüppe noch die Radträger verschwenken. Die Verschwenkung der Radträger setzt erst ein, wenn die Totpunktlage überwunden ist und die Spurstange sich außerhalb des Schwenkbewegungsraumes der Laufräder befindet. Das Schwenken der Laufräder erfolgt somit quasi zeitverzögert. Die beiden Anlenkpunkte des Lenkers können auch elastisch abstandsveränderbar aneinander zugeordnet sein. Hierzu kann der Lenker selbst elastisch sein. Es ist aber auch vorgesehen, dass der Lenker aus einem Rohr besteht und innerhalb des Rohres sich ein Federelement befindet und ein Gelenk des Lenkers elastisch gegenüber dem Rohr verschieblich angeordnet ist. Zufolge dieser Ausgestaltung wird die Spurstange in der Gebrauchsstellung gleichsam durch die elastische Kraft des Lenkers in ihrer die Abstandslage der Radträger fixierenden Stellung gehalten. Zur Fixierung der Spurstange in dieser Stellung kann die Spurstange auch mit den Radträgern verrasten. Dazu kann die Spurstange bspw. an ihren Enden jeweils einen Bund aufweisen. Dieser Ringbund tritt in eine bogenförmige Schlitzöffnung am Radträger. Damit ist der Radträger in Achsrichtung der Spurstange an die Spurstange gefesselt. Die Radträger sind dadurch sogar doppelt gefesselt, nämlich einerseits durch den in seiner Endstellung fixierten Lenker und andererseits durch die die beiden Radträger starr miteinander verbindenden Spurstange.

In einer Weiterbildung der Erfindung ist vorgesehen, dass der die Spurstange tragende Hebelarm ein zweiarmiges Kunststoffformteil ist. Dieses Kunststoffformteil kann eine zentrale Nut ausbilden, die in der Gebrauchsstellung in der Tragrahmenebene sich erstreckt. Diese Nut kann den Lenker aufnehmen. Wie grundsätzlich im Stand der Technik vorbekannt, können die Radträger über Stirnverzahnungen mit der Schüppe bewegungsgekoppelt sein. Die Lagerung des die Spurstange tragenden Hebelarms, also insbesondere des Kunststoffformteiles, kann mittels Halteformteilen verwirklicht sein. Bei diesen Halteformteilen kann es sich um U-förmige Kunststoffverkleidungen handeln, die einen Teilabschnitt eines Rohres des Tragrahmens teilumfassen. Der Handgriff der dem der Schüppe zugeordneten Ende des Tragrahmens gegenüberliegt, kann, wie grundsätzlich im Stand der Technik vorbekannt, höhenverstellbar ausgestaltet sein. Hierzu kann der Handgriff einem U-förmigen Rohr zugeordnet sein, welcher in den den Tragrahmen ausbildenden Rohren teleskopierbar geführt ist. In den verschiedenen Höhenstellungen kann der Handgriff mittels Exzenterklemmen fixiert werden. Die beiden Rohre des Tragrahmens können mit mehreren Traversen miteinander verbunden sein. Diese Traversen können nach hinten ausgebildete Ausbuchtungen ausbilden, so dass der Transport von länglichen Gegenständen erleichtert ist.

In einer Variante der Erfindung besitzt die Handhabe die Form eines D. Dabei bildet der D-Steg die Griffzone aus. An den D-Bögen ragen Rastfortsätze ab, die in eine rastende Verbindung zu den Radträgern gebracht werden können, um deren Position zu fixieren. Die Rastfortsätze können dabei im Wesentlichen halbrohrförmig ausgebildet sein und einen Schlitz oder eine Hinterschneidung aufweisen, wobei in den Schlitz oder die Hinterschneidung ein Kragen eines Rastzapfens eintreten kann, welcher Rastzapfen fest mit dem Radträger verbunden ist. Der Rastfortsatz kann als Schelle mit dem rohrförmig gestalteten D-Bogen verbunden sein. In einer Weiterbildung der Erfindung ist vorgesehen, dass der von einem U-förmigen Rohr gebildete Handgriff in der ein- oder austeleskopierten Stellung verrastbar ist. Hierzu besitzt eine Traverse zwei in Gegenrichtung voneinander weg federbeaufschlagte Riegel, deren Köpfe in Rastaussparungen des Rohres eintreten können. Zum Zurückziehen der Riegel dient ein Taster. Dieser Taster ist etwa mittig in der Traverse angeordnet und besitzt Schrägflanken, die mit Schrägflanken der Riegel zusammenwirken.

Ausführungsbeispiele der Erfindung werden nachfolgend anhand beigefügter Zeichnungen erläutert. Es zeigen:
- Fig. 1: in perspektivischer Darstellung in der Gebrauchsstellung eine Transportkarre,

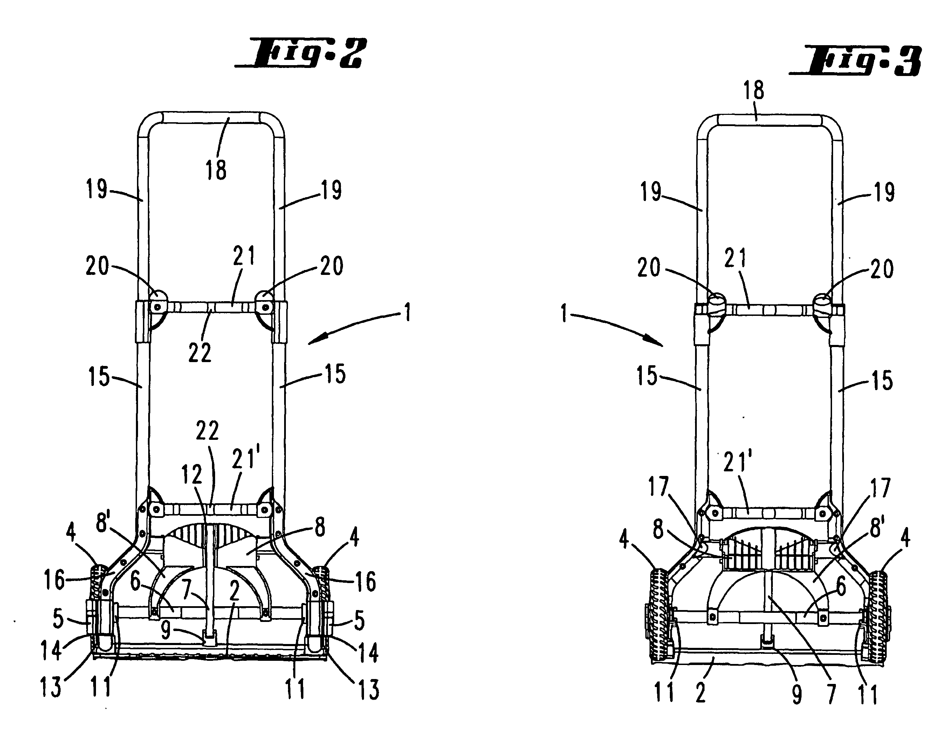

- Fig. 2: die Transportkarre in der Frontansicht,

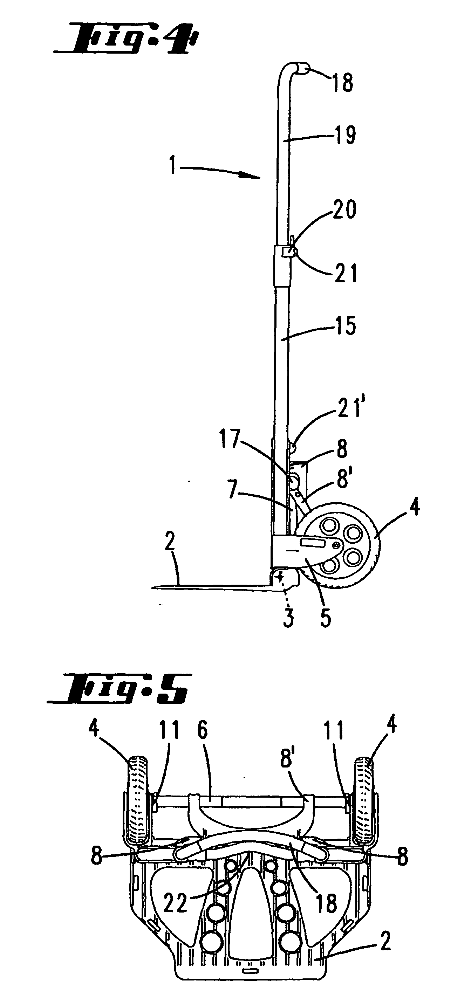

- Fig. 3: die Transportkarre in der Rückansicht,

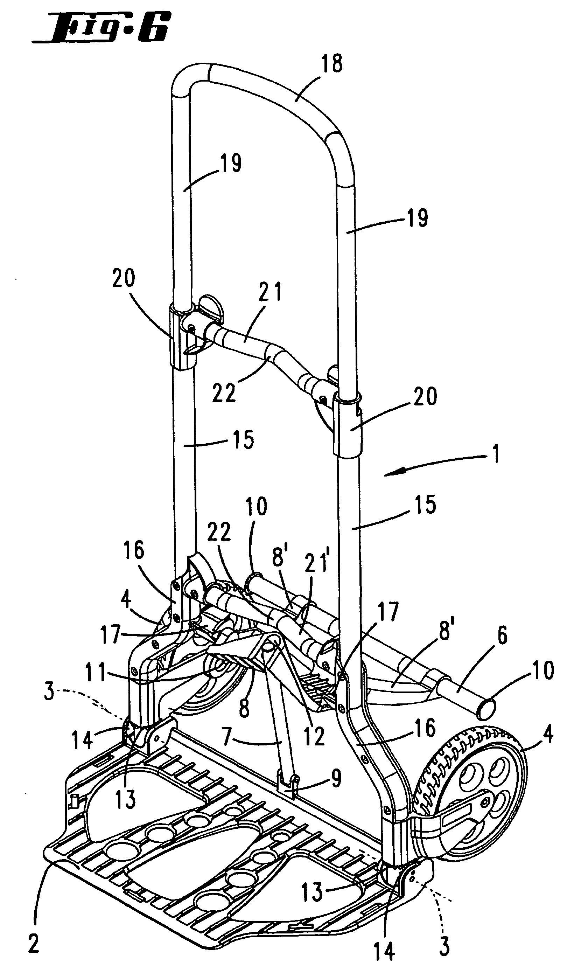

- Fig. 4: die Transportkarre in der Seitenansicht,
- Fig. 5: die Transportkarre in der Draufsicht,

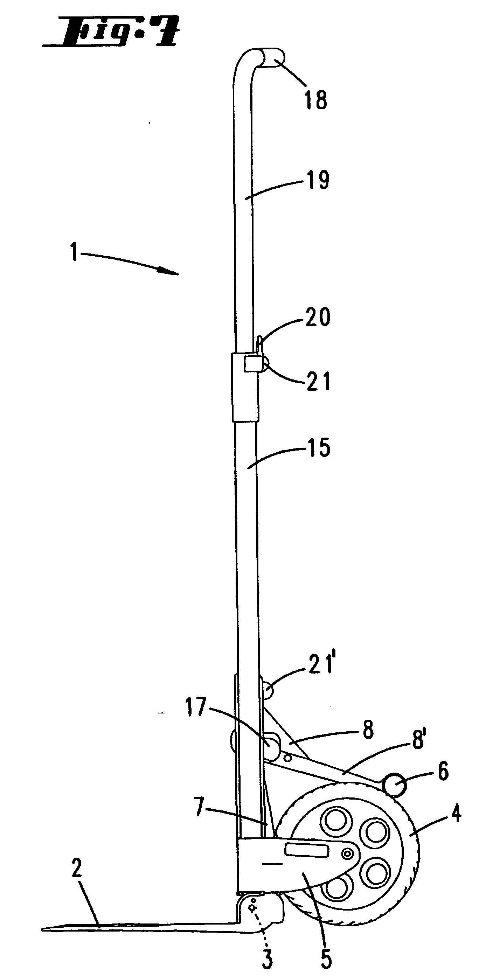

- Fig. 6: die Transportkarre in einer Darstellung gemäß Fig.1 mit aus ihrer Verrastung gelösten Spurstange nach Überschreiten der Totpunktlage,

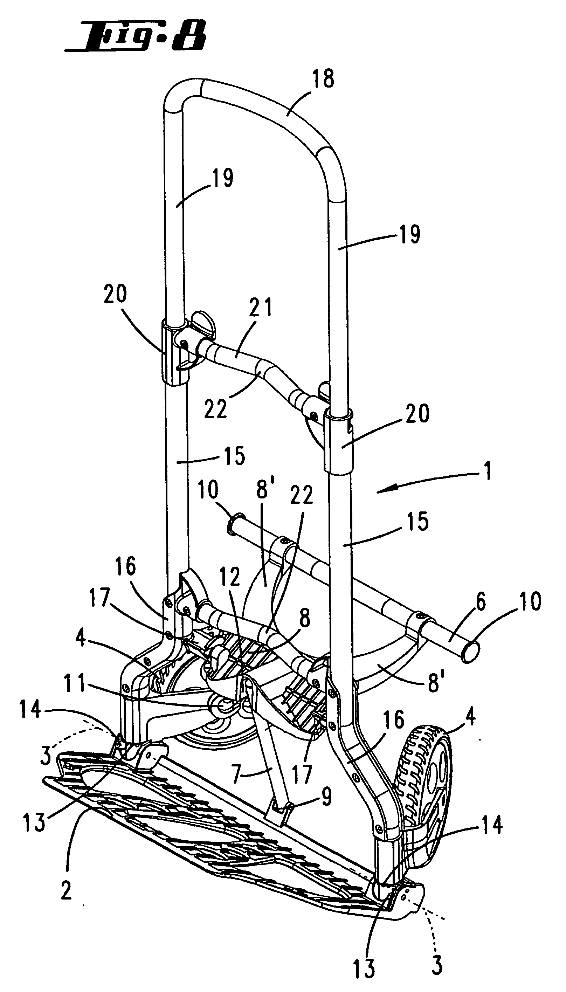

- Fig. 7: eine Darstellung des Zustandes gemäß Fig. 6 in einer Seitenansicht,
- Fig. 8: eine Folgedarstellung gemäß Fig. 7, in welcher die Spurstange weiter verschenkt ist und sich die Schüppe leicht angehoben hat und sich die Radträger leicht verschwenkt haben,

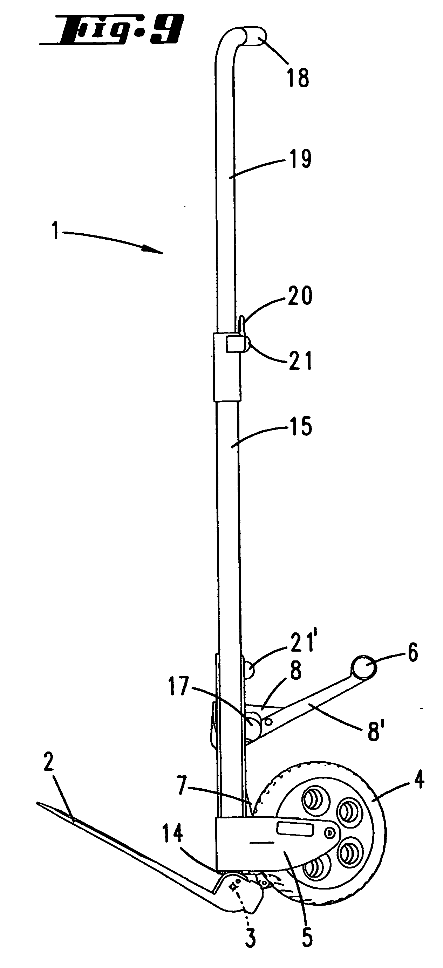

- Fig. 9: eine Seitenansicht des Zustandes gemäß Fig. 8,
- Fig. 10: eine perspektivische Darstellung der Transportkarre in der Nichtgebrauchsstellung, in welcher die Schüppe, die Radträger und der die Spurstange tragende Hebel eine Parallellage zum Tragrahmen einnimmt,
- Fig. 11: eine Darstellung gemäß Fig. 4, jedoch ausschnittsvergrößert und mit weggebrochenem Radträger 4 in unmittelbarer Draufsicht auf den Lenker und seine Anlenkstellen,
- Fig.12: eine Darstellung gemäß Fig.11 bei aus der Raststellung verschwenkter Spurstange,

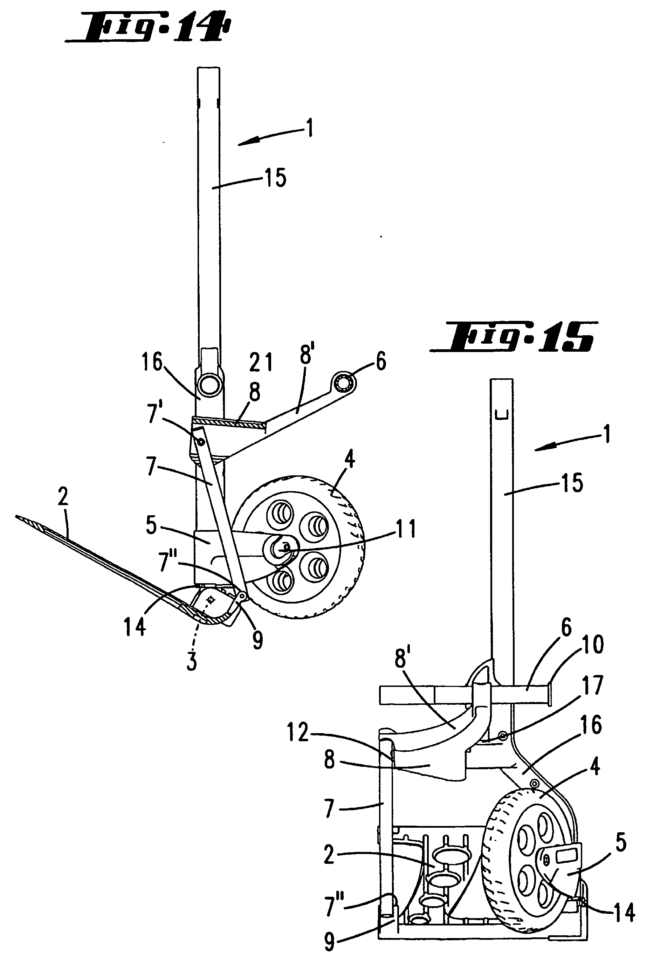

- Fig. 13: eine vergrößerte, perspektivische Teildarstellung der Betriebsstellung gemäß Fig. 12,
- Fig. 14: eine Bewegungsfolgedarstellung der Fig. 12 bei leicht verschwenkter Schüppe und verschwenktem Radträger,
- Fig. 15: eine rückwärtige Ansicht von Fig. 14,
- Fig. 16: eine vergrößerte Darstellung des Verzahnungseingriffs der Verzahnung der Schüppe in die Verzahnung des Radträgers in einer Funktionsstellung gemäß Fig. 14,
- Fig. 17: eine Folgedarstellung der Fig. 14,
- Fig. 18: die rückwärtige Ansicht dazu,
- Fig. 19: eine Folgedarstellung der Fig. 17 in der vollständig eingeschwenkten Nichtgebrauchsstellung,
- Fig. 20: der Zustand gemäß Fig. 19 in rückwärtiger Ansicht,
- Fig. 21: die Schüppe einer zweiten Ausführungsform,
- Fig. 22: den Schnitt gemäß der Linie XXII in vergrößerter Darstellung im Bereich der Rolle,
- Fig. 23: in vergrößerter Darstellung die elastische Anlenkung des Lenkers an den Arm der Handhabe,
- Fig. 24: eine Frontansicht auf eine Transportkarre eines weiteren Ausführungsbeispiels,
- Fig. 25: die Rückansicht auf die Transportkarre der Variante gemäß Fig. 24,
- Fig. 26: eine Draufsicht auf die Transportkarre der Variante gemäß Fig. 24,
- Fig. 27: eine Schnittdarstellung gemäß Fig. 11 der Variante gemäß Fig. 24,
- Fig. 28: in perspektivischer rückwärtiger Darstellung ein weiteres Ausführungsbeispiel der Erfindung,
- Fig. 29: aus dem Blickwinkel gemäß Fig. 28 die vergrößerte Darstellung des Ausschnittes XXIX,
- Fig. 30: eine perspektivische seitliche Darstellung gemäß Fig.12 der Variante gemäß Fig. 28,
- Fig. 31: eine vergrößerte, perspektivische Teildarstellung der Betriebsstellung gemäß Fig. 30, von schräg oben,
- Fig. 32: die Rückansicht eines Tragrahmens der Variante gemäß Fig. 28 mit entfernter Traversenabdeckung,
- Fig. 33: eine vergrößerte Darstellung des in Fig. 32 mit XXXIII dargestellten Ausschnittes,
- Fig. 34: eine vergrößerte Darstellung des Tasters und
- Fig. 35: eine Darstellung gemäß Fig. 33 bei zurückgezogenem Riegel.

Die in den Zeichnungen dargestellte Transportkarre besitzt einen Tragrahmen 1, der aus zwei sich im Wesentlichen parallel erstreckenden Rohren 15 besteht. Die Rohre 15 sind an ihrem einen Ende mit einer Traverse 21 verbunden. Die Verbindung der Traverse 21 mit den Rohren 15 erfolgt mittels Kunststoffverbindungsstücken, die gleichzeitig Exzenterklemmen 20 für ein U-förmiges Rohr 19 ausbilden, welches in das Rohr 15 hineingesteckt ist. Der U-Steg des U-förmigen Rohres 19 bildet einen Handgriff 18 aus. Zufolge der Teleskopierbarkeit kann die Höhenlage des Handgriffes 18 eingestellt und zufolge der Exzenterklemmen 20 in jeder Höhenlage fixiert werden.

Der Abstand der beiden zunächst parallel verlaufenden Rohre 15 vergrößert sich nach unten hin. Auch dort befindet sich eine Traverse 21', die die beiden Rohre 15 miteinander verbindet. Die Verbindung der Traverse 21' mit den Rohren 15 erfolgt mittelst eines Halteformteiles 16, welches eine im Wesentlichen S-förmige Erstreckung hat und im Profil U-förmig gestaltet ist, um einen Teilabschnitt des Rohres 15 aufzunehmen. Um den Endabschnitt jeden Rohres 15 ist ein Radträger 5 schwenkbar. Dieser aus Kunststoff bestehende Radträger 5 besitzt eine Gabel, welche jeweils ein Laufrad 4 aufnünmt.

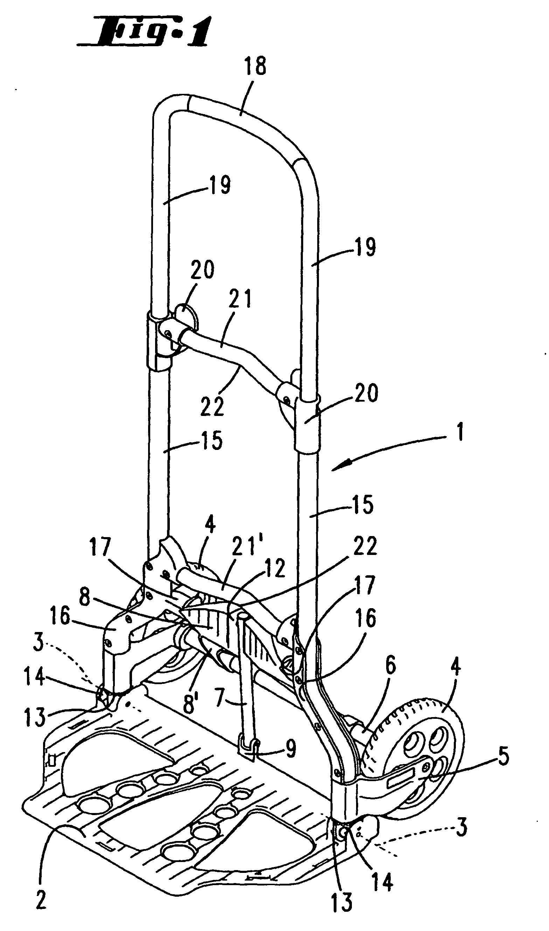

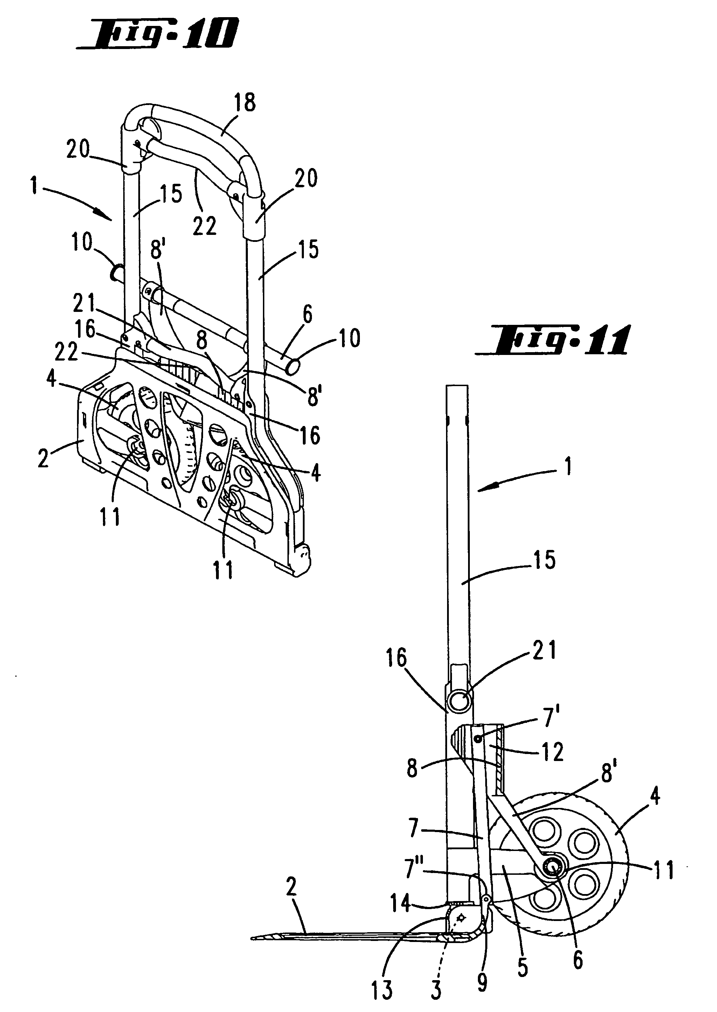

Die Stirnseite des Lagerflansches des Radträgers 5 ist, wie aus der Fig. 16 ersichtlich, mit einer Verzahnung 13 versehen. In diese Verzahnung 13 greift eine Verzahnung 14 ein, die zu einer aus Stahl, Aluminium oder einem Kunststoff bestehenden Schüppe gehört. Diese flach ausgebildete, im Ausführungsbeispiel Aussparungen aufweisende Schüppe 2 ist an den Enden der Rohre 15 angelenkt. Zufolge des Eingriffs der Verzahnungen 13 und 14 ist die Schüppe 2 mit den Radträgern 5 bewegungsgekoppelt. Wird die Schüppe aus der in Fig. 1 dargestellten Gebrauchsstellung in die in Fig. 10 dargestellte Nichtgebrauchsstellung verschwenkt, so werden die Radträger 5 mit verschwenkt.

In der in Fig.1 dargestellten Gebrauchsstellung ist ein Verschwenken der Schüppe jedoch nicht möglich, da sich einerseits die Radträger 5 nicht verschwenken können und andererseits der Lenker 7 totpunktlagenfixiert ist.

Der Lenker 7 ist mit seiner Anlenkstelle 7" an einem rückwärtig über die Schüppenschwenkachse 3 vorstehenden Betätigungsfortsatz 9 der Schüppe angelenkt. Der Lenker 7 erstreckt sich etwa in der Tragrahmenebene und ist mit seinem anderen Anlenkende 7' an einem Hebel 8 angelenkt.

Der Hebel 8 wird von einem Kunststoffformteil gebildet, welches in seiner Mitte eine Nut 12 ausbildet, in welcher in der Gebrauchsstellung der Lenker 7 raumgünstig einliegt. Mit ihren beiden Achsfortsätzen, die eine zur Schüppenschwenkachse 3 raumparallele Hebelschwenkachse definieren, ist der Hebel 8 in Schwenklagern 17, die von dem Halteformteil 16 ausgebildet werden, schwenkgelagert. Der Hebel 8 ist zweiarmig. Der Lastarm des Hebels 8 greift an der Anlenkstelle 7' des Lenkers 7 an. Der Kraftarm des Hebels 8 wird von zwei Armen 8' des Kunststoffformteiles ausgebildet. Diese beiden Arme 8' bilden am freien Ende Augen aus, durch welche die besagte Spurstange 6 hindurchgesteckt ist.

In der Gebrauchsstellung verbindet die Spurstange 6 die beiden inneren Gabelschenkel der Radträger 5 miteinander. Zur Fixierung der Spurstange an den Radträgern 5 besitzen die Gabelflanken bogenförmig ausgebildete Schlitzöffnungen, die eine Rasttasche 11 ausbilden. In diese Rasttasche 11 kann ein Bund 10 des Endes der Spurstange 6 eingeführt werden. In der Gebrauchsstellung liegt die Achse nicht in der Drehachse der Laufräder, sondern versetzt hin zur Schwenkachse der Achsträger, also zwischen der Drehachse der Laufräder und der Schwenkachse der Achsträger.

Der Hebel 8 besitzt eine nach rückwärts ausgebildete Ausbuchtung. Kongruente Ausbuchtungen 22 besitzen die Traversen 21 und 21'. Auch der Handgriff 18 kann eine derartige Ausbuchtung ausbilden, so dass insgesamt eine in Fig. 5 erkennbare horizontal sich erstreckende Rinne entsteht, die das Transportieren von länglichen und runden Gegenständen erleichtert.

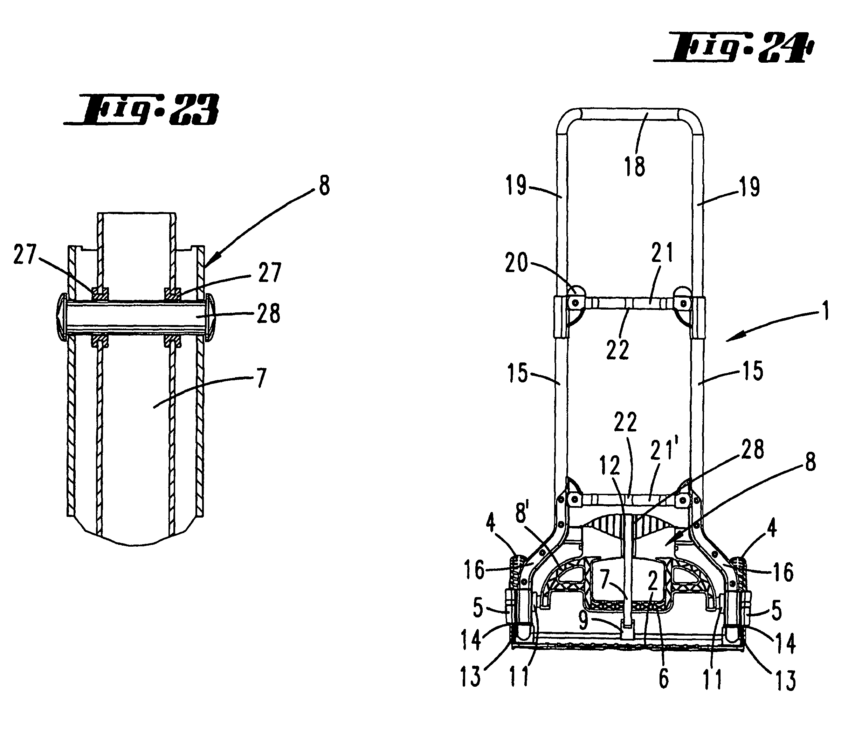

Wie insbesondere die Fig. 23 zeigt, wird der Lenker von einem hohlem, im Querschnitt kreisrunden Rohr gebildet. Den Lenker 7 durchdringt ein Zapfen 28 bspw. aus Stahl, der beidseitig eine Nietkappe tragen kann. Dieser Zapfen verbindet den Lenker 7 mit dem Hebel 8. Um eine elastische Ankopplung von Lenker 7 an Hebel 8 zu erzielen, besitzen die zueinander fluchtenden Öffnungen des Lenker 7, welche von dem Zapfen 28 durchgriffen sind, elastische Auskleidungen, die sich bei einer Belastung deformieren können. Dadurch ist es möglich, dass sich der Zapfen 28 innerhalb der Öffnungen bewegen kann. Die von den elastischen Auskleidungen 27 erzeugte Rückstellkraft wird bei der Übertotpunktverlagerung beim Verschwenken der Handhabe von der Zwischenstellung in die Endstellung gespannt.

Die Funktionsweise der Transportkarre ist die folgende:

In Fig. 11 ist die Gebrauchsstellung dargestellt, in welcher die Bünde 10 der Spurstange 6 in den ihnen zugeordneten Taschen 11 einliegen, so dass die Lage der Radträger 5 fixiert ist. In dieser Stellung kann der Lenker 7 auf Zug beansprucht sein. Hierzu können sich die beiden Anlenkstellen 7', 7" bevorzugt elastisch voneinander entfernen. Dies kann durch ein innerhalb des Lenkers angeordnetes Elastikelement, bspw. eine Feder realisiert sein. Die Schüppe 2 wird dadurch in ihre Schwenkendstellung gezogen.

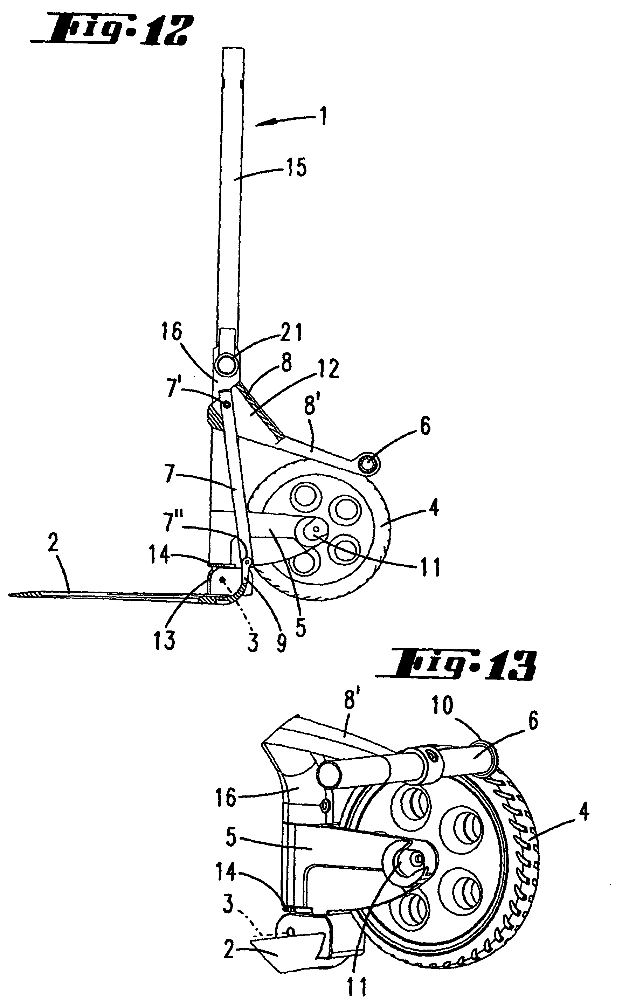

Wird durch Angriff an der Spurstange 6, wodurch diese als Handgriff benutzt wird, die Spurstange aus der Verrastung ausgehoben, so verschwenkt sich der Hebel 8 in der Darstellung gemäß Fig. 11 entgegen dem Uhrzeigersinn. Dabei wird der Anlenkpunkt 7' leicht angehoben, bis die in Fig.12 dargestellte Totpunktlage erreicht ist. Zufolge dieser Totpunktlage wird in der Funktionsstellung gemäß Fig. 11 die Spurstange 6 von der vom Lenker aufgebrachten Zugspannung in der Raststellung gehalten.

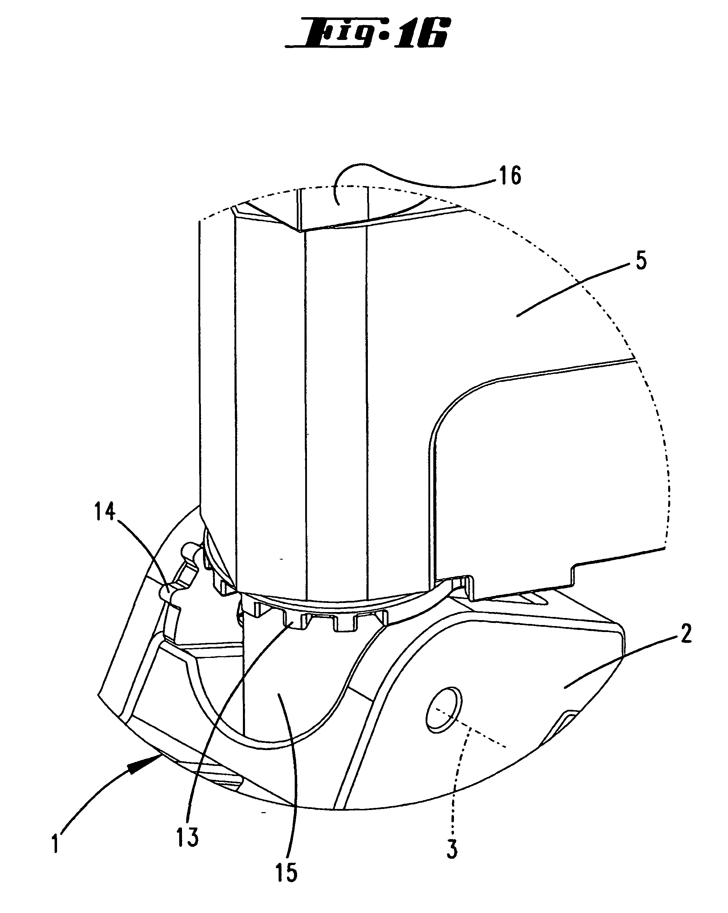

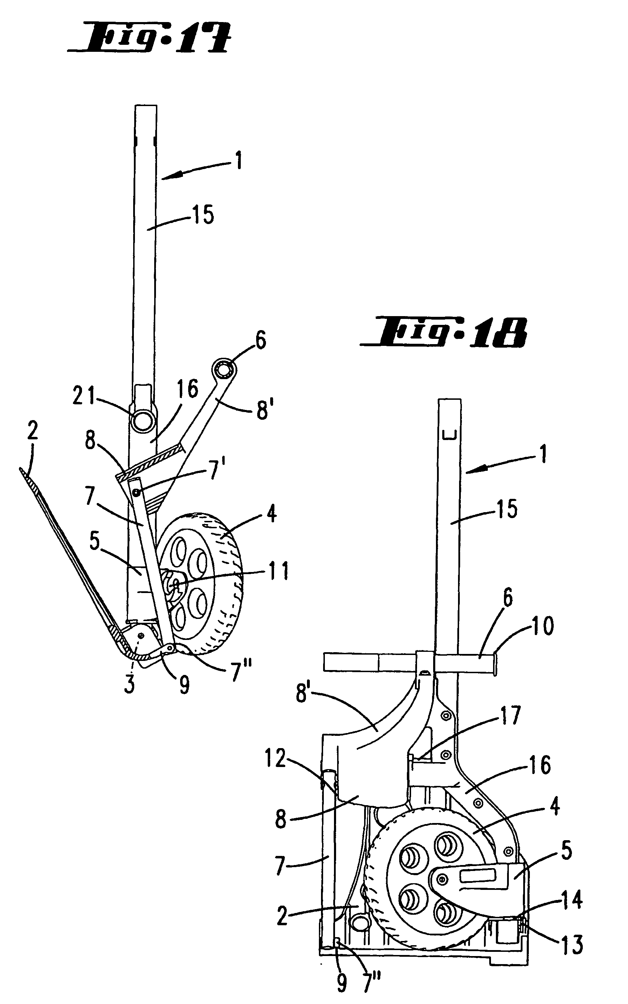

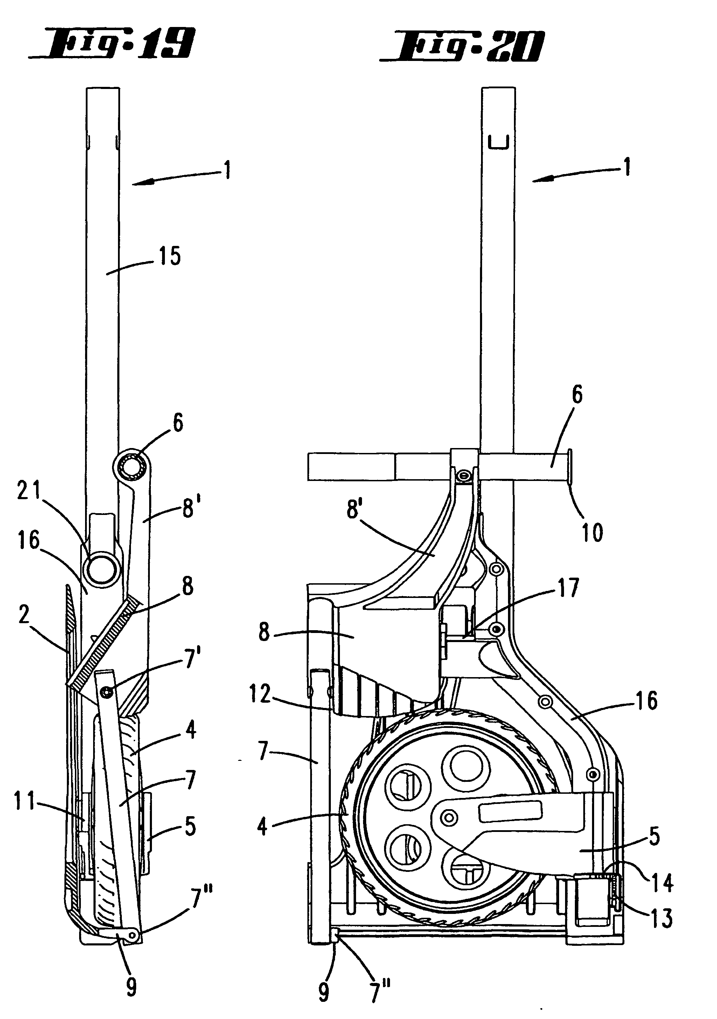

Die Totpunktlage ist dann überwunden, wenn die Spurstange 6 den Bewegungsschwenkraum der Laufräder 4 verlassen hat. Wird jetzt die Spurstange in Richtung auf die in den Figuren 14 bis 16 dargestellte Betriebsstellung weiter verschwenkt, so beginnen die Radträger 5 und die Schüppe 2 sich um die jeweilige Schwenkachse zu verschwenken. Diese Verschwenkung setzt sich über die Betriebsstellung, die in den Figuren 17 und 18 dargestellt ist, bis in die in den Figuren 19 und 20 dargestellte Nichtgebrauchsstellung fort, in welcher die Räder und die Schüppe parallel zum Tragrahmen liegen.

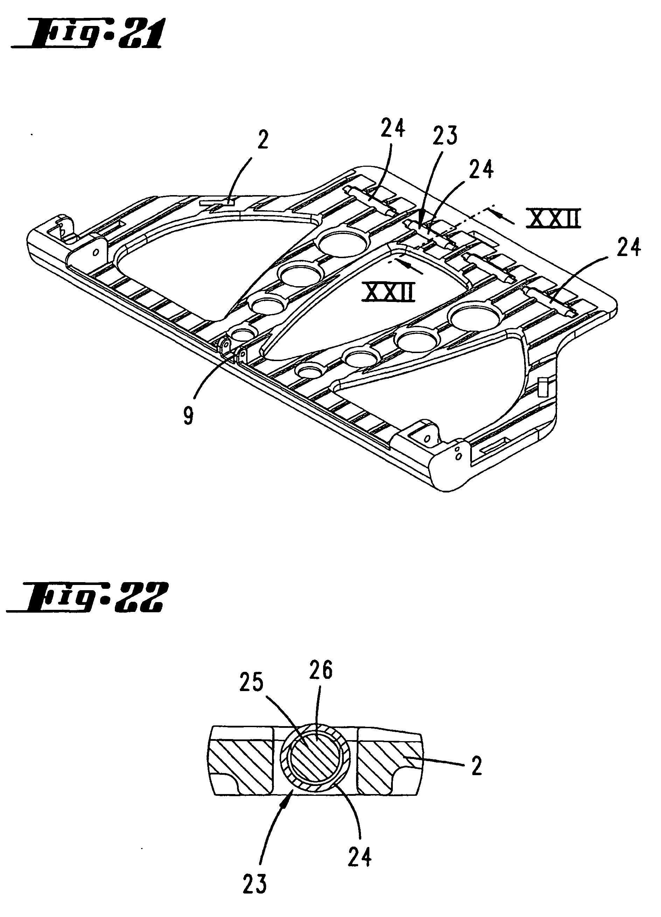

Die Figuren 21 und 22 zeigen eine modifiziert ausgebildete Schüppe. Im Bereich der Vorderkante der Schüppe 2 befinden sich walzenförmige Rollen 23, deren Achsen fluchtend zueinander liegen und parallel zur Schwenkachse der Schüppe verlaufen. Wie der Figur 22 zu entnehmen ist, weisen die Rollen 23 Rollhülsen 24 auf, die um Achsen 25 drehbar gelagert sind. Die Rollen 23 liegen in individuellen, schlitzförmigen Aussparungen der Schüppe 2 und werden mittels Befestigungsschrauben 26 dort fixiert. Die Befestigungsschrauben 26 durchragen in einem schräg zur Achse gerichteten Verlauf den Achskörper 25. Hierdurch ist eine Montage von der Schüppenoberseite oder der Schüppenunterseite möglich.

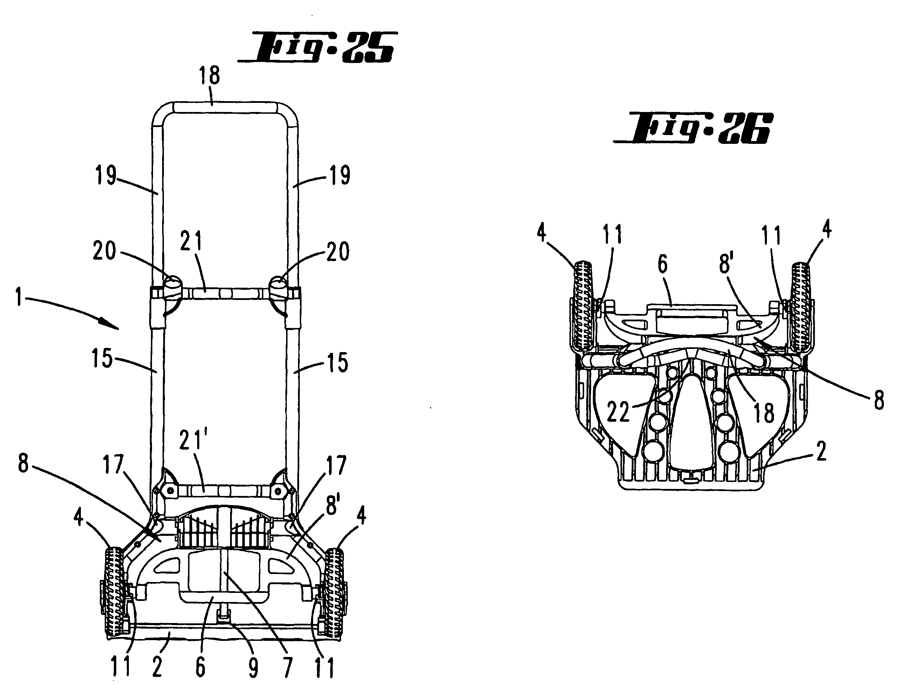

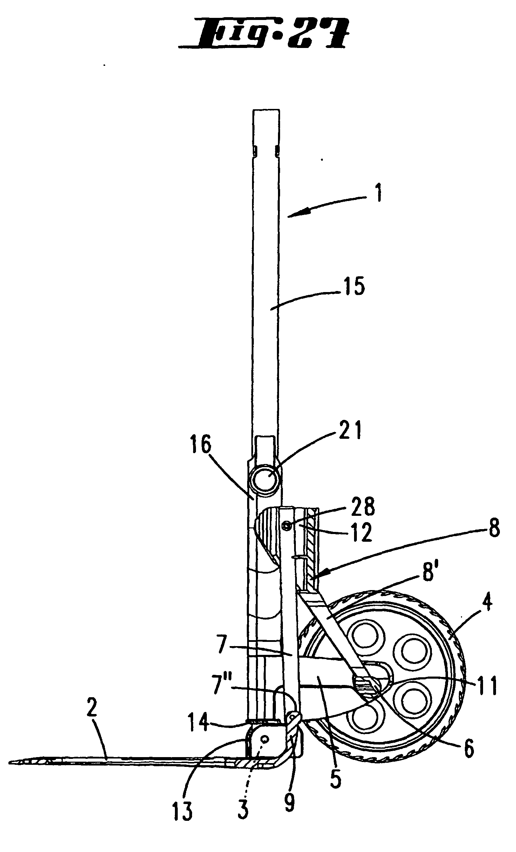

Das in den Figuren 24 bis 27 dargestellte Ausführungsbeispiel entspricht im Wesentlichen dem ersten Ausführungsbeispiel, lediglich die Handhabe 8 ist anders gestaltet. Diese Handhabe besitzt jetzt keine durchgehende Spurstange mehr, sondern besteht aus einem einheitlichen Kunststoffteil, welches randseitige Bügel 8' ausbildet, welchem die Ringbunde 10 zugeordnet sind, die mit den Rasttaschen 11 zusammenwirken. Die Ringbunde 10 sitzen an Achsstummeln, die von den Bügeln 8' ausgehen. Die Bügel sind mit Stabilisierungsquerverbindungen mit einem Handgriff 6 verbunden. Dieser Handgriff liegt etwa in der Mitte zwischen den beiden Bügeln 8'. Gegenüber der gedachten Achse der beiden Laufräder 4 ist die Handhabe 6 näher zum Tragrahmen beabstandet, was zu einer stabileren Bauform führt.

Die Funktionsweise des zweiten Ausführungsbeispiels entspricht im Wesentlichen der Funktionsweise des ersten Ausführungsbeispiels. Ausgehend aus einer beispielsweise der Figur 10 entsprechenden Verwahrstellung kann die Handhabe 6 nach unten geschwenkt werden. Dabei schwenken gleichzeitig die Schüppe 2 und die beiden Radträger 5 um 90° in ihre Gebrauchsstellung. Die Gebrauchsstellung ist dann erreicht, wenn die Handhabe 6 eine Zwischenstellung erreicht hat, wie sie bspw. in der Fig. 12 dargestellt ist. Wird die Handhabe aus dieser Zwischenstellung weiterverschwenkt, so werden die Gummieinsätze 27 gespannt, was mit einer Streckung der Anlenkung zwischen Hebel 8 und Schüppe 2 einhergeht. Nach Überwinden einer Totpunktstellung können die beiden Achsfortsätze, die die Bünde 10 tragen, in die entsprechenden Rasttaschen 11 der Radträger 5 einrasten. In dieser Stellung steht der Lenker 7 noch unter Spannung, so dass die Schüppe klapperfrei in ihrer Gebrauchsstellung gehalten ist. Auch die Radträger werden von der Handhabe in der Gebrauchsstellung gesichert, was durch die in den Rasttaschen 11 einliegenden Bünde 10 gewährleistet ist.

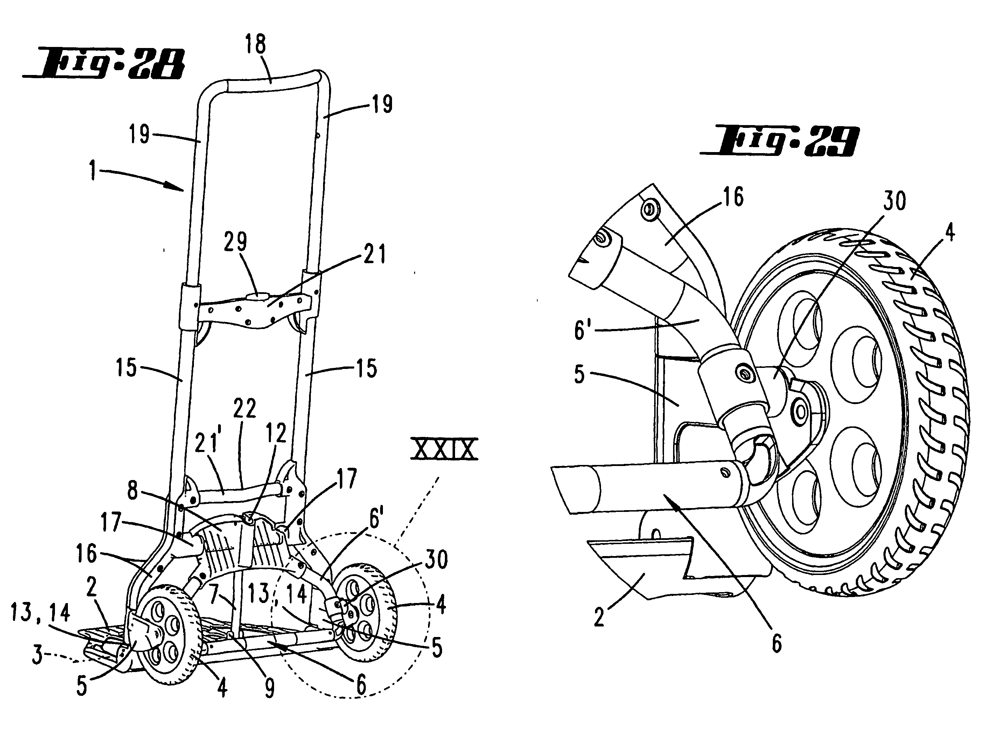

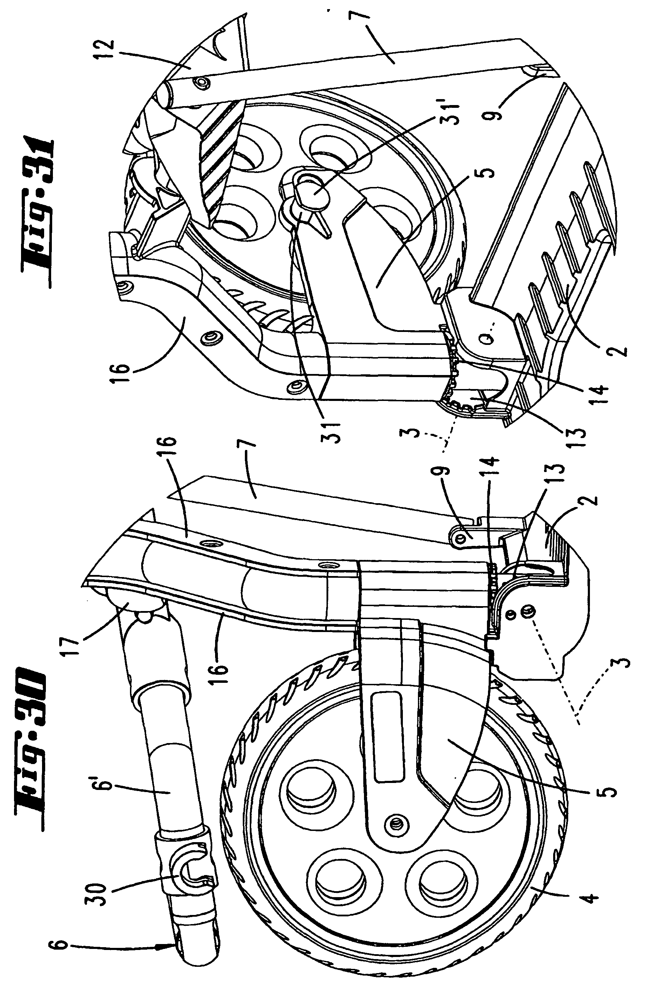

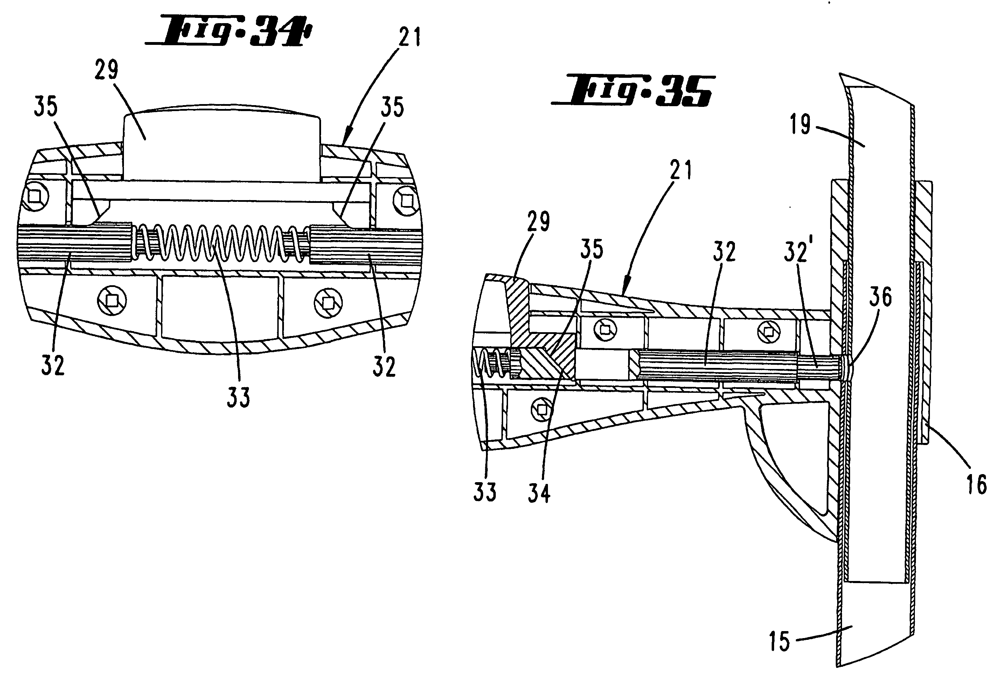

Bei den in den Figuren 28 bis 35 dargestellten weiteren Ausführungsbeispiel besitzt die Handhabe zum Verschwenken der Schüppe 2 die Form eines D. Die beiden D-Bögen 6' der Handhabe 6 besitzen jeweils bogenauswärtsgerichtete Rastfortsätze 30, die schellenartig an dem Rundrohr des D-Bogens 6' befestigt sind. Die Rastfortsätze 30 besitzen ein halbrohrförmiges Ende (vgl. Fig. 30). Dieses halb-rohrförmige Ende ist so gestaltet, dass es rastend auf einen am Radträger 5 befestigten Rastzapfen 31 aufklipsbar ist. Stirnseitig besitzt der Rastzapfen 31 einen Rastkragen 31'. Dieser Rastkragen 31' kann in eine Hinterschneidung bzw. einen Schlitz des Rastfortsatzes 30 eintreten.

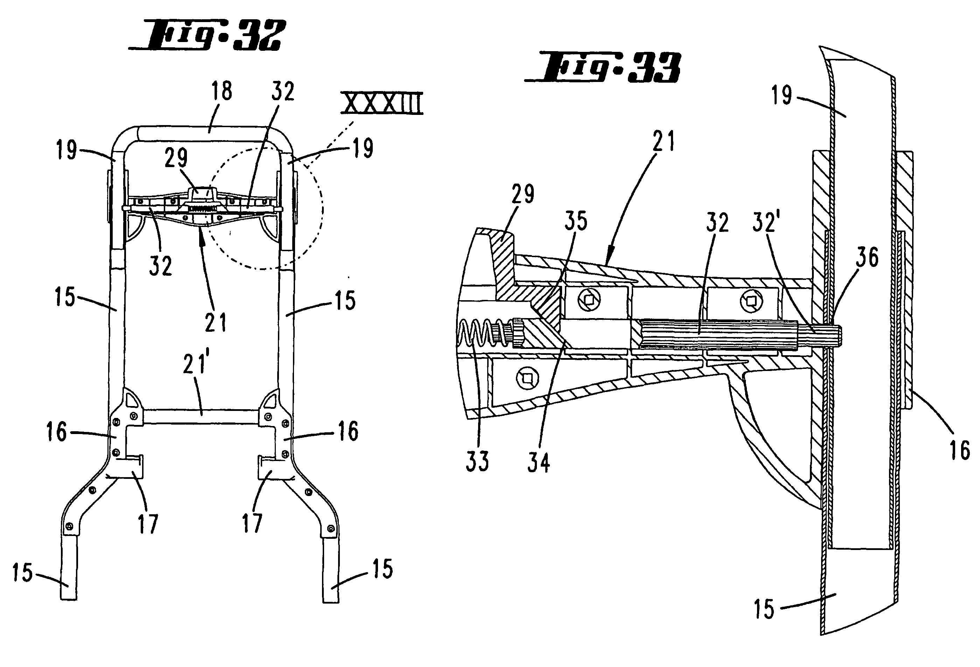

In den Figuren 32 bis 35 ist eine besondere Verrastung des U-förmigen Handgriffes in der einteleskopierten Stellung dargestellt. Eine gleiche Verrastung ist aber auch in der austeleskopierten Stellung möglich. Der Rohrabschnitt 19 des Handgriffes 18 steckt dabei in einem Rohr 15 des Tragrahmens 1. Die beiden Rohre 15 des Tragrahmens 1 sind mit einer Traverse 21 miteinander verbunden. Die Traverse 21 besteht aus zwei Kunststoffhalbschalen, die miteinander verschraubt sind. In der Traverse 21 sind zwei Riegel 32 verschieblich angeordnet.

Die Riegel werden in Gegenrichtung von einer Feder 33 beaufschlagt, so dass ihre Riegelköpfe 32' in Rastaussparungen 36 der Rohre 19 eintreten können.

Zum Zurückziehen der Riegel 32 dient ein mittig in der Traverse 22 angeordneter Taster 29. Dieser Taster 29 besitzt zwei voneinander beabstandete Schrägflanken 35. Jede der beiden Schrägflanken 35 wirkt dabei mit einer Schrägflanke 34 eines der beiden Riegel 32 derart zusammen, dass eine Querverlagerung des Tasters 29 zur Verlagerungsrichtung der Riegel 32 die beiden Schrägflankenpaare 35, 34 gegeneinander abgleiten lässt, so dass die Riegel 32 unter Spannung der Druckfeder 33 aus den Rastaussparungen 36 zurückgezogen werden.

## Patentansprüche

1. Transportkarre mit einem Tragrahmen (1), an dessen einem Ende eine um eine Schwenkachse (3) schwenkbare Schüppe (2) angelenkt ist, die über ein Getriebe mit zwei jeweils um eine quer zur Schüppenschwenkachse (3) verschwenkbare und Laufräder (4) tragende Radträgern derart bewegungsgekoppelt ist, dass die Radträger (5) beim Schwenken der Schüppe aus einer parallel zum Tragrahmen (1) ausgerichteten Verwahrstellung in eine quer dazu gerichtete Gebrauchsstellung ausschwenken, in welcher sie parallel zueinander ausgerichtet sind, wobei eine um eine parallel zur Schüppenachse (3) verschwenkbare Betätigungshandhabe (6) mit einem Lenker (7) mit der Schüppe (2) bewegungsgekoppelt ist, **gekennzeichnet dadurch daß** beim Verschwenken der Handhabe (6) von einer Nichtgebrauchsstellung in eine Zwischenstellung die Radträger (5) aus ihrer Verwahrstellung bis in ihre Gebrauchsstellung ausschwenken und beim Weiterschwenken der Handhabe (6) bis in eine Endstellung, in welcher die Handhabe (6) die beiden Radträger (5) schwenkfixiert, auf den Lenker (7) eine Spannkraft ausgeübt wird.

2. Transportkarre nach Anspruch 1, **dadurch gekennzeichnet, dass** die die Radträger (5) schwenkfixierenden Abschnitte am Kraftarm eines zweiarmigen Hebels (8) sitzen, dessen Lastarm an dem etwa in der Tragrahmenebene verlagerbaren Lenker (7) angreift, welcher Lenker (7) an einem Betätigungsfortsatz (9) der Schüppe (2) angelenkt ist.

3. Transportkarre nach einem oder mehreren der vorhergehenden Ansprüche, **dadurch gekennzeichnet, dass** der Lenker (7) bei der Verlagerung der Handhabe von der Zwischenstellung in die Endstellung über einen Totpunkt verlagert wird.

4. Transportkarre nach einem oder mehreren der vorhergehenden Ansprüche, **dadurch gekennzeichnet, dass** der Totpunkt einer Handhabenschwenkstellung entspricht, in welcher sich die Handhabe (6) außerhalb des Schwenkbewegungsraumes der Laufräder (4) befindet.

5. Transportkarre nach einem oder mehreren der vorhergehenden Ansprüche, **dadurch gekennzeichnet, dass** die beiden Anlenkpunkte (7', 7") des Lenkers (7) elastisch abstandsveränderbar sind.

6. Transportkarre nach einem oder mehreren der vorhergehenden Ansprüche, **dadurch gekennzeichnet, dass** der Lenker (7) mittels einer elastischen Lagerung (27) am Hebel (8) angelenkt ist.

7. Transportkarre nach einem oder mehreren der vorhergehenden Ansprüche, **dadurch gekennzeichnet, dass** Rastelemente der Handhabe (6) in Rasttaschen (11) der Radträger (5) einrastet.

8. Transportkarre nach einem oder mehreren der vorhergehenden Ansprüche, **gekennzeichnet durch** den jeweiligen Enden einer von der Handhabe (6) gebildeten Spurstange zugeordnete Bünde (10), die in bogenförmige Schlitzöffnungen am Radträger (5) einrasten.

9. Transportkarre nach einem oder mehreren der vorhergehenden Ansprüche, **dadurch gekennzeichnet, dass** der die Handhabe (6) tragende Hebel (8) ein zweiarmiges Kunststoffformteil ist.

10. Transportkarre nach Anspruch 9, **dadurch gekennzeichnet, dass** der Lenker (7) in der Gebrauchsstellung in einer Nut (12) des Kunststoffformteiles liegt.

11. Transportkarre nach einem oder mehreren der vorhergehenden Ansprüche, **dadurch gekennzeichnet, dass** der Radträger (5) über Stirnverzahnungen (13, 14) mit der Schüppe (2) bewegungsgekoppelt ist.

12. Transportkarre nach einem oder mehreren der vorhergehenden Ansprüche, **gekennzeichnet durch** ein einen Teilabschnitt eines Rohres (15) des Tragarmes teilumfassendes Halteformteil (16), welches das Lager (17) für den die Spurstange (6) tragenden Hebel (8) ausbildet.

13. Transportkarre nach einem oder mehreren der vorhergehenden Ansprüche, **dadurch gekennzeichnet, dass** dem der Schüppe (2) zugeordneten Ende des Tragrahmens (1) gegenüberliegend ein höhenverstellbarer Handgriff (18) angeordnet ist.

14. Transportkarre nach einem oder mehreren der vorhergehenden Ansprüche, **dadurch gekennzeichnet, dass** der Handgriff (18) als U-förmiges Rohr (19) ausgebildet ist, welches aus Rohren (15) des Tragrahmens (1) teleskopierbar ist und in verschiedenen Höhenstellungen stufenlos fixierbar ist.

15. Transportkarre nach einem oder mehreren der vorhergehenden Ansprüche, **gekennzeichnet durch** die beiden Rohre (15) des Tragrahmens (1) miteinander verbindende Traversen (21, 21'), welche eine sich nach rückwärts erstreckende Ausbuchtung (22) ausbilden.

16. Transportkarre nach einem oder mehreren der vorhergehenden Ansprüche, **dadurch gekennzeichnet, dass** im vorderen Bereich der Schüppe (2) in Schlitzen einliegende Rollen (23) vorgesehen sind, auf denen ein zu transportierender Körper auf die Schüppe gerollt werden kann.

17. Transportkarre nach einem oder mehreren der vorhergehenden Ansprüche, **dadurch gekennzeichnet, dass** die schwenkfixierenden Abschnitte bogenförmige Fortsätze (8') des Hebels (8) sind.

18. Transportkarre nach einem oder mehreren der vorhergehenden Ansprüche, **dadurch gekennzeichnet, dass** die Handhabe (6) zwischen den beiden bogenförmigen Fortsätzen (8') liegt.

19. Transportkarre nach einem oder mehreren der vorhergehenden Ansprüche, **dadurch gekennzeichnet, dass** ein einen Handgriff (18) ausbildendes U-förmiges Rohr (19) in der ein-, zwischen- und/oder austeleskopierten Stellung mittels zwei in gegensinniger Richtung in einer Traverse (21) verschiebbaren Riegel (32) fixierbar ist.

20. Transportkarre nach einem oder mehreren der vorhergehenden Ansprüche, **dadurch gekennzeichnet, dass** der Riegel (32) von einer zwischen ihnen angeordneten Druckfeder (33) in Richtung der Rastaussparungen (36) der U-Rohrschenkel (19) beaufschlagt sind.

21. Transportkarre nach einem oder mehreren der vorhergehenden Ansprüche, **dadurch gekennzeichnet, dass** die Riegel (32) mittels eines der Traverse (21) zugeordneten Taster (29) von Schrägflanken (34, 35) gesteuert zurückziehbar sind.

22. Transportkarre nach einem oder mehreren der vorhergehenden Ansprüche, **dadurch gekennzeichnet, dass** die Handhabe (6) die Form eines D-förmigen Bügels aufweist.

23. Transportkarre nach einem oder mehreren der vorhergehenden Ansprüche, **gekennzeichnet durch** den Endabschnitten (6') der D-Bögen zugeordnete Rastfortsätze (30), die einen Schlitz oder eine Aussparung aufweisen, zur Aufnahme jeweils eines Rastkragens (31') eines jeweils am Radträger (5) zugeordneten Rastzapfens (31).

## Claims

1. Dolly with a carrying frame (1), at one end of which is articulated a scoop (2) which can be pivoted about a pivot axis (3) and is coupled for movement, via a gear mechanism, to two wheel carriers, which can each be pivoted about a transversely to the pivot axis (3) of the scoop and carry running wheels (4), such that, during pivoting of the scoop, the wheel carriers (5) pivot out of a storage position, in which they are oriented parallel to the carrying frame (1), into a use position, which is directed transversely to the storage position and in which they are oriented parallel to one another, an actuating handle (6) which can be pivoted about a parallel to the scoop axis (3) being coupled for movement to the scoop (2) by a connecting rod (7), **characterized in that** the wheel carriers (5) pivot out of their storage position into their use position when the handle (6) is pivoted from a not-in-use position into an intermediate position, and the connecting rod (7) is subjected to stressing when the handle (6) is pivoted further into an end position, in which the handle (6) fixes the two wheel carriers (5) in respect of pivoting.

2. Dolly according to Claim 1, **characterized in that** the portions which fix the wheel carriers (5) in respect of pivoting are seated on the power arm of a two-armed lever (8), the load arm of which acts on the connecting rod (7), which can be displaced approximately in the carrying-frame plane and is articulated on an actuating extension (9) of the scoop (2).

3. Dolly according to one or more of the preceding claims, **characterized in that**, when the handle is displaced from the intermediate position into the end position, the connecting rod (7) is displaced over a dead center.

4. Dolly according to one or more of the preceding claims, **characterized in that** the dead center corresponds to a handle pivoting position in which the handle (6) is located outside the pivoting space of the running wheels (4).

5. Dolly according to one or more of the preceding claims, **characterized in that** the two points of articulation (7', 7'') of the connecting rod (7) can have their spacing changed elastically.

6. Dolly according to one or more of the preceding claims, **characterized in that** the connecting rod (7) is articulated on the lever (8) by means of an elastic mount (27).

7. Dolly according to one or more of the preceding claims, **characterized in that** latching elements of the handle (6) latches into latching pockets (11) of the wheel carriers (5).

8. Dolly according to one or more of the preceding claims, **characterized by** collars (10) which are associated with the respective ends of a tie rod formed by the handle (6) and which latch into arcuate slot openings on the wheel carrier (5).

9. Dolly according to one or more of the preceding claims, **characterized in that** the lever (8) which carries the handle (6) is a two-armed plastics-material molding.

10. Dolly according to Claim 9, **characterized in that**, in the use position, the connecting rod (7) is located in a groove (12) of the plastics-material molding.

11. Dolly according to one or more of the preceding claims, **characterized in that** the wheel carrier (5) is coupled for movement to the scoop (2) via radial toothing formations (13, 14).

12. Dolly according to one or more of the preceding claims, **characterized by** a shaped retaining part (16) which partially encloses a portion of a tube (15) of the carrying arm and forms the bearing (17) for the lever (8), which carries the tie rod (6).

13. Dolly according to one or more of the preceding claims, **characterized in that** a height-adjustable handgrip (18) is disposed opposite that end of the carrying frame (1) which is associated with the scoop (2).

14. Dolly according to one or more of the preceding claims, **characterized in that** the handgrip (18) is formed as a U-shaped tube (19) which can be telescoped out of tubes (15) of the carrying frame (1) and can be fixed in a stepless manner in different height positions.

15. Dolly according to one or more of the preceding claims, **characterized by** crossmembers (21, 21') which connect the two tubes (15) of the carrying frame (1) to one another and form a rearwardly extending convexity (22).

16. Dolly according to one or more of the preceding claims, **characterized in that** rollers (23) positioned in slots are provided in the front region of the scoop (2), on which rollers a body which is to be transported may be rolled onto the scoop.

17. Dolly according to one or more of the preceding claims, **characterized in that** the portions which provide fixing in respect of pivoting are arcuate extensions (8') of the lever (8).

18. Dolly according to one or more of the preceding claims, **characterized in that** the handle (6) is located between the two arcuate extensions (8').

19. Dolly according to one or more of the preceding claims, **characterized in that** a U-shaped tube (19) forming a handgrip (18) can be fixed in the telescoped- in position, in an intermediate telescoping position and/or the telescoped-out position by means of two bolts (32) which can be displaced in opposite directions in a crossmember (21).

20. Dolly according to one or more of the preceding claims, **characterized in that** the bolt (32) is forced, by means of a compression spring (33) disposed between them, in the direction of the latching cutouts (36) of the U-tube legs (19).

21. Dolly according to one or more of the preceding claims, **characterized in that** the bolts (32) can be retracted by means of a button (29) associated with the crossmember (21), control being provided by oblique flanks (34, 35).

22. Dolly according to one or more of the preceding claims, **characterized in that** the handle (6) is in the form of a D-shaped bracket.

23. Dolly according to one or more of the preceding claims, **characterized by** latching extensions (30) which are associated with the end portions (6') of the D-arcs and have a slot or a cutout for respectively accommodating a latching collar (31') of a latching stub (31) associated with the wheel carrier (5) in each case.

## Revendications

1. Chariot transporteur comprenant un châssis ou cadre support (1), à une extrémité duquel est articulé un volet (2) susceptible de pivoter autour d'un axe de pivotement (3), volet couplé cinématiquement, par l'intermédiaire d'une transmission, à deux supports de roues susceptibles de pivoter chacun transversalement autour d'un axe de pivotement de volet (3) et portant des roues de déplacement (4), de sorte que les supports de roues (5) lors du pivotement du volet de sa position de rangement, orientée parallèlement au cadre support (1), en une position d'utilisation, orientée transversalement par rapport à celui-ci, sont déployées par pivotement, position d'utilisation à laquelle ils sont orientés parallèlement les uns aux autres, une poignée d'actionnement (6), pouvant pivoter parallèlement à l'axe de volet (3), munie d'un bras articulé (7), étant couplée cinématiquement au volet (2), **caractérisé en ce que**, lors du pivotement de la poignée (6), d'une position de non utilisation à une position intermédiaire, les supports de roues (5) sont pivotés de leur position de rangement à leur position d'utilisation et, lors de la continuation du pivotement de la poignée (6), jusqu'à une position finale, dans laquelle la poignée (6) fixe en pivotement les deux supports de roues (5), une force de serrage est exercée sur le bras articulé (7).

2. Chariot transporteur selon la revendication 1, **caractérisé en ce que** les tronçons, fixant le pivotement des supports de roues (5), sont montés sur un bras de force d'un levier (8) à deux bras, dont le bras de charge agit sur le bras articulé (7) déplaçable à peu près dans le plan du cadre support, ledit bras articulé (7) étant articulé à un prolongement d'actionnement (9) du volet (2).

3. Chariot transporteur selon l'une ou plusieurs des revendications précédentes, **caractérisé en ce que**, lors du déplacement de la poignée, le bras articulé (7) est déplacé de la position intermédiaire à la position finale en passant par un point mort.

4. Chariot transporteur selon l'une ou plusieurs des revendications précédentes, **caractérisé en ce que** le point mort correspond à une position de pivotement de poignée dans laquelle la poignée (6) se trouve à l'extérieur de l'espace de déplacement par pivotement des roues de déplacement (4).

5. Chariot transporteur selon l'une ou plusieurs des revendications précédentes, **caractérisé en ce que** les deux points d'articulation (7', 7") du bras articulé (7) sont espacés d'une distance modifiable élastiquement.

6. Chariot transporteur selon l'une ou plusieurs des revendications précédentes, **caractérisé en ce que** le bras articulé (7) est articulé sur le levier (8) au moyen d'un montage en palier (27) élastique.

7. Chariot transporteur selon l'une ou plusieurs des revendications précédentes, **caractérisé en ce que** des éléments d'encliquetage de la poignée (6) s'encliquettent dans des poches d'encliquetage (11) des supports de roues (5).

8. Chariot transporteur selon l'une ou plusieurs des revendications précédentes, **caractérisé par** des collerettes (10) associées aux extrémités respectives d'une barre d'accouplement formée par la poignée (6) et s'encliquetant dans des ouvertures de fente à forme arquée, ménagées sur le support de roue (5).

9. Chariot transporteur selon l'une ou plusieurs des revendications précédentes, **caractérisé en ce que** le levier (8) portant la poignée (6) est une pièce moulée en matière synthétique, à deux bras.

10. Chariot transporteur selon la revendication 9, **caractérisé en ce que** le bras articulé (7), à la position d'utilisation, est situé dans une rainure (12) de la pièce moulée en matière synthétique.

11. Chariot transporteur selon l'une ou plusieurs des revendications précédentes, **caractérisé en ce que** le support de roue (5) est couplé cinématiquement au volet (2) par l'intermédiaire de dentures frontales (13, 14).

12. Chariot transporteur selon l'une ou plusieurs des revendications précédentes, **caractérisé par** une pièce de forme de maintien (16), entourant partiellement un tronçon partiel d'un tube (15) du bras support et formant le palier (17) pour le levier (8) portant la barre d'accouplement (6).

13. Chariot transporteur selon l'une ou plusieurs des revendications précédentes, **caractérisé en ce qu'**à l'opposé de l'extrémité, associée au volet (2), du cadre support (1) est disposée une poignée (18) réglable en hauteur.

14. Chariot transporteur selon l'une ou plusieurs des revendications précédentes, **caractérisé en ce que** la poignée (18) est réalisée sous la forme de tubes (19) en forme de U, susceptibles de se déplacer de façon télescopique depuis les tubes (15) du cadre support (1) et d'être fixés de façon continue en différentes positions en hauteur.

15. Chariot transporteur selon l'une ou plusieurs des revendications précédentes, **caractérisé par** des traverses (21, 21') reliant ensemble les deux tubes (15) du cadre support (1), et formant une courbure (22) s'étendant vers l'arrière.

16. Chariot transporteur selon l'une ou plusieurs des revendications précédentes, **caractérisé en ce que**, dans la zone avant du volet (2), sont prévus des rouleaux (23) s'introduisant dans des fentes, et sur lesquels un corps à transporter peut être roulé sur le volet.

17. Chariot transporteur selon l'une ou plusieurs des revendications précédentes, **caractérisé en ce que** les tronçons fixant la position sont des prolongements (8') à forme arquée du levier (8).

18. Chariot transporteur selon l'une ou plusieurs des revendications précédentes, **caractérisé en ce que** la poignée (6) est située entre les deux prolongements (8') à forme arquée.

19. Chariot transporteur selon l'une ou plusieurs des revendications précédentes, **caractérisé en ce qu'**un tube (19) en forme de U, constituant une poignée (18), est susceptible d'être fixé à la position de rétraction télescopique, intermédiaire et/ou de déploiement télescopique, au moyen de deux pênes (32) déplaçables en sens inverse dans une traverse (21).

20. Chariot transporteur selon l'une ou plusieurs des revendications précédentes, **caractérisé en ce que** les pênes (32) sont sollicités par un ressort de compression (33), disposé entre eux, dans la direction des évidements d'encliquetage (36) des branches (19) de tube en U.

21. Chariot transporteur selon l'une ou plusieurs des revendications précédentes, **caractérisé en ce que** les pênes (32) sont rétractables de façon commandée par des flancs obliques (34, 35), au moyen d'un bouton-poussoir (29) associé à la traverse (21).

22. Chariot transporteur selon l'une ou plusieurs des revendications précédentes, **caractérisé en ce que** la poignée (6) présente la forme d'un étrier en forme de D.

23. Chariot transporteur selon l'une ou plusieurs des revendications précédentes, **caractérisé par** des prolongements d'encliquetage (30) associés aux tronçons d'extrémité (6') des étriers en D, présentant une fente ou un évidement pour recevoir chaque fois une collerette d'encliquetage (31') d'un tourillon d'encliquetage (31), associé respectivement au support de roue (5).
